# EUROPEAN PATENT APPLICATION

(11) **EP 2 216 591 A2**
(43) Date of publication of application: **11.08.2010**
(21) Application number: 10250218.4
(22) Date of filing: 09.02.2010
(51) Int. Cl.: F21V 8/00, G02B 6/00

(54) **Light guide film and backlight unit having the same**

(30) Priority: 09.02.2009 KR 20090010139
(71) Applicant: Samsung Mobile Display Co., Ltd., Yongin-city, Gyunggi-do 446-711 (KR)
(72) Inventor: Jang, Da-Eun, Ulju-gun, Ulsan (KR); Cho, Won-Ki, Ulju-gun, Ulsan (KR); Lee, Dong-Hwan, Ulju-gun, Ulsan (KR); Choi, Chan-lek, Ulju-gun, Ulsan (KR)
(74) Representative: Mounteney, Simon James

(57) **Abstract**

A backlight unit includes a light source for emitting light; and a light guide film for directing light emitted from the light source toward a liquid crystal display panel. In the backlight unit, the light guide film includes a polycarbonate (PC) film comprising a plasticizer; and at least one of a reflective layer or an optical layer on at least one surface of the PC film.

## Description

### BACKGROUND OF THE INVENTION

### 1. Field of the Invention

The present invention relates to a backlight unit of a liquid crystal display device.

### 2. Description of Related Art

A liquid crystal display device is a display device using modulation of light of liquid crystal cells. A molecular arrangement of liquid crystals is adjusted corresponding to an applied voltage to change optical properties of the liquid crystal cells. The liquid crystal cells pass light in accordance with properties associated with the molecular arrangement, such as birefringence, optical linearity and optical scattering characteristics, and/or other properties.

The liquid crystal display device does not emit light by itself, but instead uses external light, unlike self-luminescent display devices such as organic light emitting display devices, cathode ray tubes (CRTs), and light emitting diode (LED) display devices.

That is, the liquid crystal display device is a light-receiving device that displays images by controlling an amount of external light passing through the liquid crystal cells. For this reason, the liquid crystal display device requires a separate light source, such as a backlight unit, used to irradiate light to a liquid crystal display panel.

A conventional backlight unit includes a light source; a light guide plate which allows light emitted from the light source to be incident to a liquid crystal display panel; a plurality of optical sheets which allows luminance distribution of light incident from the light guide plate to be uniform to improve vertical injectivity; and a reflective sheet which allows light radiated to the rear of the light guide plate to be reflected.

The conventional backlight unit configured as described above is necessarily provided with a plurality of components. Therefore, the backlight unit is thick, and accordingly the luminance of a liquid crystal display device is decreased.

Further, the light guide plate, the optical sheets and the reflective sheet are individually produced using an injecting process or similar process, and then assembled together to make the backlight unit. Therefore, manufacturing cost is increased, and productivity is lowered due to complexity of operations.

### SUMMARY OF THE INVENTION

Accordingly, the present invention sets out to provide a light guide film and a backlight unit including the same, wherein a flexible light guide film is utilized instead of a light guide plate provided in conventional backlight units. A reflective layer and/or an optical layer is formed on at least one surface of the light guide film, such that the thickness of the backlight unit is significantly decreased and a manufacturing process of the backlight unit is simplified, thereby maximizing or greatly increasing productivity.

According to an aspect of the present invention, there is provided a light guide film for directing light emitted from a light source toward a liquid crystal display panel, the light guide film including a polycarbonate film including a plasticizer; and at least one of a reflective layer or an optical layer on at least one surface of the polycarbonate film.

The optical layer may be on a first surface of the polycarbonate film, and the reflective layer may be on a second surface of the polycarbonate film opposite the first surface. When the light guide film includes the optical layer, the optical layer may include a diffusion layer and/or a prism layer. The prism layer may be on the diffusion layer.

According to another aspect of the present invention, there is provided a backlight unit including a light source for emitting light; and a light guide film for directing light emitted from the light source toward a liquid crystal display panel, wherein the light guide film includes a polycarbonate film including a plasticizer; and at least one of a reflective layer or an optical layer on at least one surface of the polycarbonate film.

According to embodiments of the present invention, a flexible light guide film is utilized as a light guide plate for a backlight unit, and a reflective layer or an optical layer is formed on at least one surface of the light guide film, such that injection molding through which a conventional light guide plate is formed need not be utilized, thereby saving development cost and improving manufacturing efficiency.

The above and other features of the invention are set out in the appended claims.

### BRIEF DESCRIPTION OF THE DRAWINGS

The accompanying drawings, together with the specification, illustrate embodiments of the present invention, and, together with the description, serve to explain the principles of the present invention.

FIG. 1 is a schematic cross-sectional view of a liquid crystal display device with a backlight unit according to an embodiment of the present invention.

FIGS. 2A to 2C are schematic cross-sectional views showing various embodiments of light guide films.

### DETAILED DESCRIPTION OF EXEMPLARY EMBODIMENTS

In the following detailed description, only certain embodiments of the present invention have been shown and described by way of illustration. As those skilled in the art will recognize, the described embodiments may be modified in various different ways without departing from the scope of the present invention. Accordingly, the drawings and description are to be regarded as illustrative in nature and not restrictive. In addition, when an element is referred to as being "on" another element, it may be directly on the other element, or may be indirectly on the other element, with one or more elements interposed therebetween. Also, when an element is referred to as being "connected to" another element, it may be directly connected to the other element, or may be indirectly connected to the other element, with one or more elements connected therebetween. Hereinafter, like reference numerals refer to like elements.

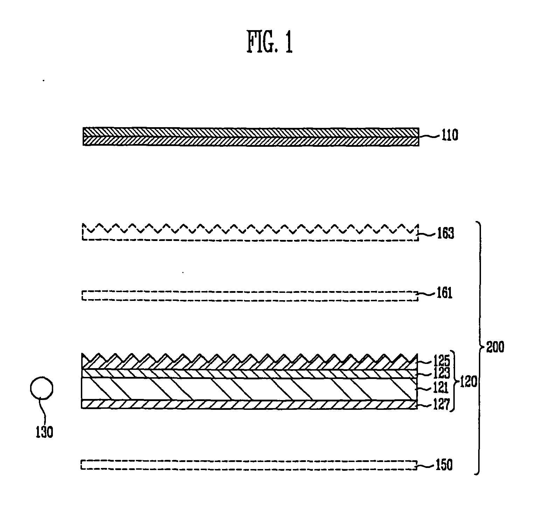

FIG. 1 is a schematic cross-sectional view of a liquid crystal display device with a backlight unit according to an embodiment of the present invention.

Referring to FIG. 1, the liquid crystal display device according to the embodiment of the present invention includes a liquid crystal display panel 110 on which images are displayed; and a backlight unit 200 disposed behind the liquid crystal display panel 110 to irradiate light to the liquid crystal display panel 110.

The backlight unit 200 includes a lamp 130 which serves as a light source, and a light guide film 120 which guides light emitted from the lamp 130 toward the liquid crystal display panel 110.

In some embodiments, the light guide film 120 is flexible.

The light guide film 120 replaces a light guide plate that is generally the thickest component which occupies the greatest area and volume in a conventional backlight unit. The light guide film 120 further realizes flexibility for the backlight unit.

Accordingly, when the liquid crystal display panel 110 is flexible, and the backlight unit 200 providing light to the liquid crystal display panel 110 is also flexible, a flexible liquid crystal display device on which color images can be displayed can therefore be manufactured.

The conventional light guide plate is formed of a polycarbonate (PC) film. A method of forming the conventional light guide plate will be briefly described.

PC having a low molecular weight is produced by allowing phosgene to react with a basic solution, and resin having a molecular weight of about 20,000 to 100,000 is then produced by performing polymerization with respect to the PC.

Subsequently, the resin is cleansed, dried and then palletized into a sheet through compression molding or into a predetermined molded form through injection molding.

At this time, the polymer solution generally has a high viscosity, and the molding is performed at a relatively high temperature (about 295 to 325°C).

Therefore, the PC prepared through such processes has durable and hard properties. That is, the conventional PC light guide plate is formed to be thick and hard.

The light guide film 120 according to this embodiment of the present invention comprises a film 121 that is also formed of a PC material. However, the light guide film 120 has a flexible characteristic. Therefore, the light guide film 120 is formed by adding a plasticizer to the PC material of the PC film 121 so as to increase flexibility of the light guide film 120.

At this time, the plasticizer is used to facilitate processing of resin by lowering the glass transition temperature (Tg) of the resin. The plasticizer functions to provide flexibility to a hard and fragile material. Due to the flexibility provided by the addition of the plasticiser, the PC film can be relatively thin. This has the effect of reducing the overall thickness of the light guide film 120.

The plasticizer is classified as phthalate, stearic acid, mellitate, epoxy, phosphoric acid or a polymer plasticizer depending on its chemical structure. The plasticizer is also classified as heat-resistant, cold-resistant, flame-resistant, migration-resistant and/or decay-resistant depending on its characteristics. The plasticizer is also classified as a primary plasticizer or a secondary plasticizer depending on its miscibility. Here, a primary plasticizer is a plasticizer which can be independently used because of excellent miscibility with resin, and a secondary plasticizer is a plasticizer which has low miscibility with resin and is typically used together with a primary plasticizer.

Consequently, the light guide film 120 according to this embodiment of the present invention is formed by adding a plasticizer to the conventional PC, and is therefore flexible, unlike the conventional light guide plate.

Further, the light guide film 120 according to this embodiment of the present invention is formed by providing a reflective layer 127 and an optical layer, including layers 123 and 125, on at least one surface of the PC film 121.

More specifically, a diffusion layer 123 and a prism layer 125 are formed as an optical layer on a first surface of the PC film 121, that faces toward the liquid crystal display panel 110. The reflective layer 127 is formed on a surface opposite the first surface, i.e., a second surface, of the PC film 121.

The diffusion layer 123 reduces concentration of light by diffusing the light incident on the light guide film 120, so that the incident light can be substantially uniformly irradiated toward the liquid crystal display panel 110. The prism layer 125 causes light diffused by the diffusion layer 123 to be concentrated and more effectively directed toward the liquid crystal display panel 110, so that the luminance of the liquid crystal display device can be improved.

In this particular embodiment, the diffusion layer 123 and the prism layer 125 are sequentially formed on the PC film 121.

Accordingly, optical sheets 161 and 163 and/or a reflective sheet 150, typically included in a conventional backlight unit, can be omitted, thereby minimizing or reducing the thickness of the backlight unit.

The lamp 130 is disposed at a side of the light guide film 120, and light emitted from the lamp 130 enters the light guide film 120 through the side of the light guide film 120.

In some embodiments, a cold cathode fluorescent lamp (CCFL) that is a linear light source or a plurality of light emitting diodes (LEDs) that are point light sources may be used as the lamp 130.

The light guide film 120 guides light incident from the lamp 130 toward the liquid crystal display panel 110 facing the front surface, i.e., the first surface of the light guide film 120. Various types of patterns (not shown) such as micro-dot patterns are printed on the rear surface, i.e., the second surface of the light guide film 120. Here, the micro-dot patterns allow light to advance toward the liquid crystal display panel 110.

As described above, in this embodiment of the present invention, the reflective layer 127 and the optical layer 123 and 125 are coated on surfaces of the PC film 121. That is, the optical layer is formed on the first surface of the PC film 121, and the reflective layer 127 is formed on the second surface of the PC film 121. At this time, the optical layer refers to the diffusion layer 123 and/or the prism layer 125.

However, when the reflective layer 127 is not formed on the second surface of the PC film 121, a reflective sheet 150 may alternatively be formed behind the light guide film 120. Here, the reflective sheet 150 allows light emitted to the rear of the light guide film 120 to be reflected back toward the light guide film 120, thereby improving luminous efficiency.

Furthermore, when the optical layer 123 and/or 125 is not formed on the first surface of the PC film 120, a plurality of optical sheets for improving luminance and luminous efficiency may be interposed between the light guide film 120 and the liquid crystal display panel 110.

The optical sheets may include a diffusion sheet 161, a prism sheet 163 and/or various other optical sheets. The diffusion sheet 161 reduces concentration of light by diffusing the light incident to the light guide film 120, so that the incident light can be more uniformly irradiated toward the liquid crystal display panel 110.

The prism sheet 163 causes light diffused by the diffusion sheet 161 to be concentrated and more effectively directed toward the liquid crystal display panel 110, so that the luminance of the liquid crystal display device can be improved.

Although only one prism sheet 163 is illustrated in FIG. 1, the present invention is not limited thereto. That is, more than one prism sheet may be provided, in which prisms of the respective prism sheets are arranged to be aligned vertically with one another.

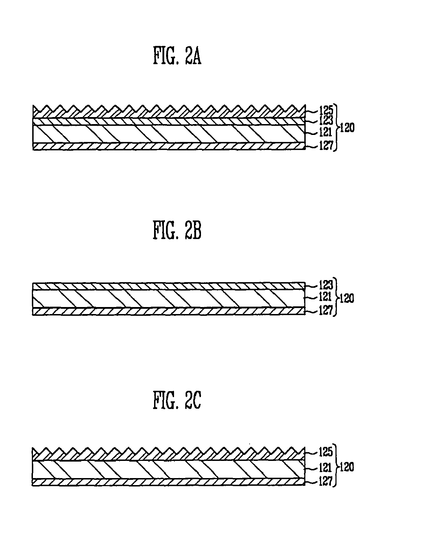

FIGs. 2A to 2C show variations of a light guide film according to the invention.

Fig. 2A shows the film 120 of the first embodiment, which has been described above.

When a light guide film 120 having he structure of the first embodiment of the present invention is provided in the backlight unit 200, an additional reflective sheet 150 located on the lower surface of the light guide film 120 and additional optical sheets 161 and 163 located on the upper surface of the light guide film 120 need not be provided.

Referring to FIG. 2B, a light guide film 120 according to a second embodiment of the present invention includes a PC film 121 including a plasticizer for flexibility; a diffusion layer 123 formed on a first surface of the PC film 121; and a reflective layer 127 formed on a second surface of the PC film 121.

In this embodiment, the diffusion layer 123 and the reflective layer 127 may be individually formed using a coating process.

When the light guide film 120 according to the second embodiment of the present invention is provided in the backlight unit 200, an additional reflective sheet 150 located on the lower surface of the light guide film 120 and an additional diffusion sheet 161 located on the upper surface of the light guide film 120 need not be provided.

Referring to FIG. 2C, a light guide film 120 according to a third embodiment of the present invention includes a PC film 121 including a plasticizer for flexibility; a prism layer 125 formed on a first surface of the PC film 121; and a reflective layer 127 formed on a second surface of the PC film 121.

In this embodiment, the prism layer 125 and the reflective layer 127 may be individually formed using a coating process.

When the light guide film 120 according to the third embodiment of the present invention is provided in the backlight unit 200, an additional reflective sheet 150 located on the lower surface of the light guide film 120 and an additional prism sheet 163 located on the upper surface of the light guide film 120 need not be provided.

While the present invention has been described in connection with certain embodiments thereof, it is to be understood that the invention is not limited to the disclosed embodiments, but is instead intended to cover various modifications and equivalent arrangements included within the scope of the appended claims, and equivalents thereof.

## Claims

1. A light guide film for directing light emitted from a light source toward a liquid crystal display panel, the light guide film comprising
a polycarbonate film comprising a plasticizer.

2. A light guide film according to claim 1, further comprising at least one of a reflective layer or an optical layer on at least one surface of the polycarbonate film.

3. A light guide film according to claim 2, wherein a said optical layer is on a first surface of the polycarbonate film, and a said reflective layer is on a second surface of the polycarbonate film opposite the first surface.

4. A light guide film according to claim 3, wherein the first surface is adapted to face the liquid crystal display panel, and the second surface is adapted to face away from the liquid crystal display panel.

5. A light guide film according to one of claims 2 to 4, wherein when the light guide film comprises the optical layer, the optical layer comprises a diffusion layer.

6. A light guide film according to claim 5, wherein the diffusion layer is for diffusing the light to more uniformly direct the light toward the liquid crystal display panel.

7. A light guide film according to one of claims 2 to 6, wherein when the light guide film comprises the optical layer, the optical layer comprises a prism layer.

8. A light guide film according to claim 7, wherein the prism layer is for concentrating the light to more effectively direct the light toward the liquid crystal display panel.

9. A light guide film according to any one of claims 2 to 4, wherein when the light guide film comprises the optical layer, the optical layer comprises a diffusion layer on the polycarbonate film and a prism layer on the diffusion layer.

10. A light guide film according to any preceding claim, wherein the reflective layer is for reflecting light directed away from the liquid crystal display panel back toward the liquid crystal display panel.

11. A light guide film according to any preceding claim, wherein the light guide film is flexible.

12. A backlight unit comprising:
a light source for emitting light; and
a light guide film for directing light emitted from the light source toward a liquid crystal display panel,
wherein the light guide film is as set out in one of claims 1 to 11.
